# EUROPEAN PATENT SPECIFICATION

(11) **EP 0 502 058 B1**
(45) Date of publication and mention of the grant of the patent: **25.05.1994**
(21) Application number: 90917509.3
(22) Date of filing: 23.11.1990
(51) Int. Cl.: F16M 11/28, A47B 9/10, B25H 1/16

(54) **PILLAR DEVICE**
PFEILERAUFBAU
DISPOSITIF DE COLONNE

(30) Priority: 23.11.1989 SE 8903943
(43) Date of publication of application: 09.09.1992
(73) Proprietor: AB VOLVO, 405 08 Göteborg (SE)
(72) Inventor: LJUNG, Orvar, S-446 00 Älvängen (SE)
(74) Representative: Hellbom, Lars Olof
(86) International application number: SE9000769
(87) International publication number: WO9108418

(56) References cited:
- DE-A- 2 551 229
- DE-A- 3 446 974
- Derwent's abstract no. D99 67 K/12, SU 928100, publ. week 8312 (SKTB Process Automn)

## Description

The present invention relates to a pillar device comprising a pair of pillar parts movable relative to each other, power actuated means acting between said pillar parts and locking means arranged to lock the pillar parts relative to each other.

A pillar or stand device according to the first part of claim 1 is known from DE-A-34 46 974.

Height adjustable work tables, which are used in assembly work, for example, can have supporting pillars or stands which are hydraulically, pneumatically or electrically operated. In certain cases it is desirable to avoid electrical operation to thus reduce the risk of accidents due to electrical faults in the equipment. When pneumatic tools are used and compressed air is available at the work place, it is advantageous to be able to use pneumatic cylinders as adjustment means for the pillar or stand. In contrast to electrical operating means in the form of an electrically driven screw device, for example, which is self-locking and provides an absolutely rigid engagement without any give whatsoever, pneumatic cylinders provide a certain amount of resilience due to the compressibility of air. If a pneumatic cylinder is used instead of an electrically driven mechanical transmission, the pillar must therefore be provided with a suitable locking device which eliminates any give in the work table and on work pieces placed on it.

The purpose of the present invention is to provide a pillar device or stand, particularly intended for a height adjustable work table, of the type described by way of introduction which is pneumatically driven and can be arranged to automatically, at the termination of a readjustment movement (as does an electrically operated pillar device) effectively lock the pillar parts together to eliminate give between them.

This is achieved according to the invention by the features of claim 1.

The invention thus makes it possible to, in a simple manner, automatically lock the pillar parts relative to each other as soon as the readjustment movement has been terminated.

In a preferred embodiment of the pillar device according to the invention, the brake device consists of a pair of expandable air chambers in the form of a pair of elastic bladders, which each press against an individual brake plate. The bladders with associated brake plates are arranged on either side of one of the pillar parts in the space between it and the surrounding pillar part. This provides a particularly simple and reliable design with a minimum of moving parts.

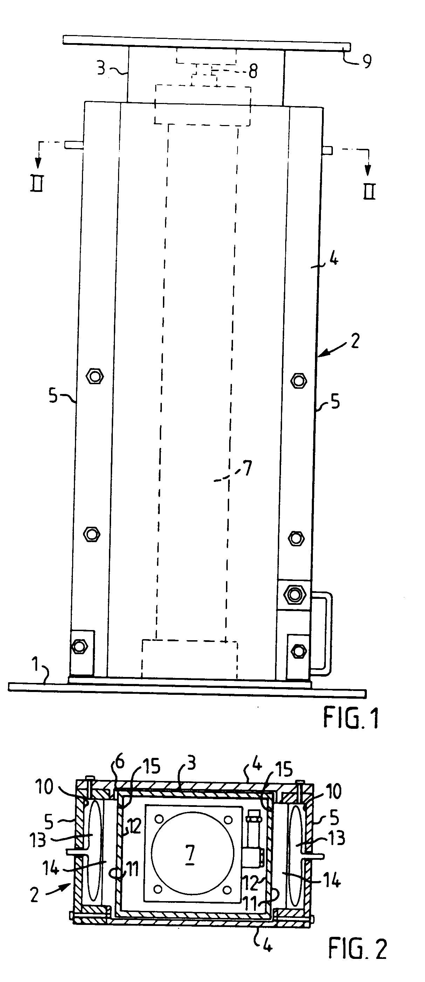

The invention will be described in more detail below with reference to examples shown in the accompanying drawings, of which
Figure 1 shows a side view of a pillar device or stand according to the invention,
Figure 2 is a cross-section along the line II-II in Figure 1, and
Figure 3 shows a circuit diagram of the control circuit of the pillar device.

The pillar device has an outer pillar part 2 fixed on a bottom plate 1 and inside the pillar part 2 an inner pillar part 3 is displaceably mounted. The pillar part 2 consists of two wall elements 4 and 5 screwed together, which together define a rectangular space 6, in which the inner pillar part 3 in the form of a four-sided pipe is mounted. The bottom plate 1 is intended to be anchored to the floor. On the plate 1, there is fixed a pneumatic cylinder 7. Its piston rod 8 is joined to a plate 9, which is designed to be the support for a work table and is fixed to the upper edge of the pillar part 3. When the air flow to the cylinder 7 is changed, with the accompanying displacement of the piston and the piston rod 8, the inner pillar part 3 will be displaced upwards or downwards in the outer pillar part 2, thus changing the height of the plate 9.

The wall elements 5 are shaped and fixed to the wall elements 4 in such a manner that a space 10 is formed between the inside of each wall element 5 and the outer surface 11 of each facing wall 12 on the inner pillar part 3. In each space, there is a bladder 13 of elastic material, e.g. rubber, and a plate 14 of plastic, for example. The bladder 13 and the plate 14 form together a brake device, and the plate 14 therefore has on its surface 15 facing the wall 12 a frictional coating. The plate 14 is loose in the space 10, i.e. it is movable towards and from the wall 12 of the inner pillar part 3, but is prevented from vertical movement by upper and lower limits (not shown) of the space 10. When air is supplied to the bladder 13, it will expand and thus press the plate 14 against the wall surface 11. By using a loose plate and an elastic bladder, one automatically achieves uniform pressure over the entire plate 14, which means that the plate 14, if required, can in practice extend over essentially the entire length of the outer pillar part 2. The bladder 13 is made as long as the plate 14 and may take the shape, when the plate extends over a major portion of the height of the pillar, of a hose which is closed at its ends. The design according to the invention can achieve very high braking forces in a simple manner. The arrangement with braking devices on either side means that the braking forces will also be balanced by each other, so that the braking forces are entirely absorbed by the braking devices and their mountings in the outer pillar part.

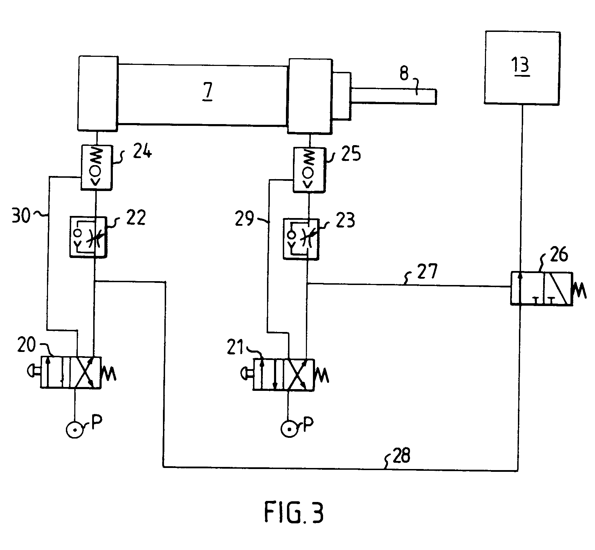

Figure 3 shows a schematic diagram of a control circuit for the pillar device described above. In Figure 3, P designates a compressor, to which two operating valves 20, 21 are connected, each of said valves communicating via an individual throttle/check valve 22, 23 and check valve 24, 25 communicates with the cylinder spaces on either side of the piston. The elastic bladders 13 are coupled between the respective operating valve 20, 21 and the throttle//check valve 22, 23 via a change-over valve 26.

In the position shown in Figure 3 of the operating valves 20, 21, these are opened and the cylinder chambers on either side of the piston are supplied with the same over-pressure. The valve 21 communicates on its side remote from the compressor via a line 27 with the operating chamber of the valve 26 to hold the valve in its opened position. Pressure medium is thus provided to the bladders 13 via a line 28 from the side of the valve 20 remote from the compressor and the open valve 26. In this state, the pillar device is locked.

When readjusting the pillar device, for raising a work table for example, i.e. displacement of the piston rod 8 to the right in Figure 3, the valve 21 is shifted manually. This puts the check valve 25 under actuation pressure via a line 29 so that it opens. Via the check valve 25, the constriction in the valve 23 and the valve 21, the right hand cylinder chamber of the cylinder 7 is ventilated. At the same time, the bladders 13 are ventilated via the valve 26, which is shifted by the line 27 being ventilated via the valve 21. The brake is thus released at the same time as a pressure difference is effected in the cylinder 7, thus resulting in displacement of the piston rod to the right.

When lowering the work table, i.e. displacing the piston rod 8 to the left in Figure 3, the operating valve 20 is shifted manually, and the check valve 24 is opened by being subjected to operating pressure via a line 30. In contrast to the process described immediately above, the valve 26 remains in the open position shown in Figure 3, since it is still subjected to operating pressure. The bladders 13 are instead ventilated via the line 28 and the valve 20.

If a loss of pressure should occur in the circuit, it is true that the brake 13, 14 will release, but the check valves 24 and 25 will maintain over-pressure in the cylinder 7, so that the pillar will not collapse.

In the preceding, an embodiment has been described with a hose-shaped elastic bladder. The expression "elastic bladder" in the following patent claims is also to be construed as encompassing a bladder in the form of an elastic membrane fixed against a rigid wall, for example.

As an alternative to an elastic bladder, a folded bellows or a folded membrane fixed to the edges of a rigid wall can be used.

## Claims

1. Pillar or stand device, comprising a pair of pillar parts movable relative to each other, pneumatic lifting means acting between said pillar parts and locking means arranged to lock the pillar parts relative to each other at least one (3) of the pillar parts having a surface (11) parallel to the direction of adjustment, the second pillar part (2) carrying a pneumatically controlled brake device (13, 14) separated from the lifting means and having a frictional surface (15), which is movable in frictional engagement with said parallel surface, said brake device comprising at least one expandable gas chamber (13), **characterized** in that the expandable gas chamber (13) cooperates with a brake plate (14) with said frictional surface (15) and which, when it is expanded during the supply of a gaseous medium, presses the brake plate against the Parallel surface (11), and that the lifting means the connected to a pneumatic control circuit to which the brake device is connected such that the gas chamber is evacuated when the lifting means are activated to move the one pillar part in relation to the other and is pressurized when the lifting means are deactivated to stop movemenet of said pillar part.

2. Pillar device according to Claim 1, **characterized** in that the expandable chamber is formed of an elastic bladder (13), which is arranged between a stationary wall element (5) on one (2) of the pillar parts and the brake plate (14).

3. Pillar device according to Claim 2, **cha****racterized** in that one (3) pillar part has two wall elements (12) parallel to the direction of movement, said wall elements being arranged with an intermediate space in which a pneumatic piston cylinder device (7) is housed, that the other pillar part (2) has two opposing stationary wall elements (5), which are arranged with an intermediate space (10) to the respective wall element (12) on the first mentioned pillar part (3), and that an elastic bladder (13) with associated brake plate (14) is arranged in each intermediate space.

4. Pillar device according to Claim 3, **cha****rachterized** in that the pillar parts are formed of a pair of tubular telescopically arranged elements (2, 3), the inner one of which surrounds a pneumatic piston-cylinder device (7), the piston rod (8) of which is joined to one pillar part and the cylinder (7) of which is joined to the other pillar part.

## Patentansprüche

1. Säulenständer mit einem Paar von Säulenteilen, die relativ zueinander bewegbar sind, mit einer pneumatischen Hubvorrichtung, die zwischen den Säulenteilen wirksam ist sowie mit Verriegelungsmitteln, die so angeordnet sind, daß sie die Säulenteilen relativ zueinander verriegeln, wobei wenigstens eines (3) der Säulenteile eine Fläche (11) hat, die parallel zur Einstellrichtung liegt und wobei das zweite Säulenteil (2) eine pneumatisch gesteuerte Bremsvorrichtung (13, 14) hat, die von der Hubvorrichtung getrennt ist und eine Reibungsfläche hat, die mit der parallelen Fläche in Reibungsberührung bringbar ist, wobei die Bremsvorrichtung wenigstens eine ausdehnbare Gaskammer (13) aufweist, dadurch **gekennzeichnet,**
daß die ausdehnbare Gaskammer (13) mit einer Bremsplatte (14) zusammenarbeitet, die die Reibungsfläche (15) aufweist, wobei die ausdehnbare Gaskammer (13) dann, wenn sie während der Zufuhr eines Gasmediums ausgedehnt wird, die Bremsplatte gegen die parallele Fläche (11) drückt und
daß die Hubvorrichtung mit einem pneumatichen Steuerschaltkreis verbunden ist, mit dem die Bremsvorrichtung so verbunden ist, daß die Gaskammer dann evakuiert wird, wenn die Hubvorrichtung betätigt wird, um ein Säulenteil relativ zum anderen zu bewegen und daß die Gaskammer dann unter Druck gesetzt wird, wenn die Hubvorrichtung außer Tätigkeit gesetzt wird, um die Bewegung des Säulenteiles anzuhalten.

2. Säulenständer nach Anspruch 1, dadurch gekennzeichnet, daß die ausdehnbare Kammer aus einem elastischen Balg besteht, der zwischen einem stationären Wandteil (5) in einem (2) der Säulenteile und der Bremsplatte (14) liegt.

3. Säulenständer nach Anspruch 2, dadurch gekennzeichnet, daß ein (3) Säulenteil zwei Wandelemente (12) hat, die zur Bewegungsrichtung parallel verlaufen, wobei diese Wandelemente mit einem Zwischenraum angeordnet sind, in dem eine pneumatische Zylinder-Kolben-Vorrichtung (7) angeordnet ist,
daß das andere Säulenteil (2) zwei einander gegenüberliegende, stationäre Wandelemente (5) hat, die mit einem Zwischenraum (10) zum jeweiligen Wandelement (12) des ersterwähnten Säulenteiles (3) angeordnet sind und
daß in jedem Zwischenraum (10) ein elastischer Balg (13) mit einer zugeordneten Bremsplatte (14) angeordnet ist.

4. Säulenständer nach Anspruch 3, dadurch gekennzeichnet, daß die Säulenteile aus einem Paar von rohrförmigen, teleskopartig angeordneten Teilen (2, 3) bestehen, von denen das innere eine pneumatische Kolben-Zylinder-Vorrichtung (7) umgibt, deren Kolbenstange (8) mit einem Säulenteil verbunden ist und deren Zylinder (7) mit dem anderen Säulenteil verbunden ist.

## Revendications

1. Dispositif de colonne ou support, comprenant une paire de parties de colonne mobiles l'une par rapport à l'autre, un moyen d'élévation pneumatique agissant entre les parties de colonne et un moyen de verrouillage agencé pour verrouiller les parties de colonne l'une par rapport à l'autre, au moins l'une (3) des parties de colonne ayant une face (11) parallèle au sens de réglage, la seconde partie de colonne (2) comportant un dispositif de frein à commande pneumatique (13,14) séparé du moyen d'élévation et ayant une face de friction (15) qui est mobile et s'engage par friction avec la face parallèle, **caractérisé** par le fait que dans le dispositif de frein comprenant au moins une chambre à gaz gonflable (13), la chambre à gaz gonflable (13) collabore avec une plaque de frein (14) avec la face de friction (15) et, lorsqu'elle est gonflée au cours de la création d'un milieu gazeux, appuie la plaque de frein contre la face parallèle (11), et par le fait que le moyen d'élévation est raccordé à un circuit de commande pneumatique auquel est raccordé le dispositif de frein, de telle sorte que le vide est fait dans la chambre à gaz lorsque le moyen d'élévation est actionné pour déplacer une partie de colonne par rapport à l'autre, et que la chambre à gaz est mise sous pression lorsque le moyen d'élévation est désactivé pour arrêter le mouvement de cette partie de colonne.

2. Dispositif de colonne selon la revendication 1, **caractérisé** par le fait que la chambre gonflable est constituée d'une vessie élastique (13) qui est disposée entre un élément de paroi fixe (5) sur l'une (2) des parties de colonne et la plaque de frein (14).

3. Dispositif de colonne selon la revendication 2, **caractérisé** par le fait qu'une partie de colonne (3) comporte deux éléments de paroi (12) parallèles au sens de déplacement, ces éléments de paroi étant agencés avec un espace intermédiaire dans lequel est logé un dispositif de cylindre à piston pneumatique (7), par le fait que l'autre partie de colonne (2) comporte deux éléments de paroi fixes opposés (5) qui sont disposés avec un espace intermédiaire (10) par rapport à l'élément de paroi respectif (12) sur la partie de colonne mentionnée en premier (3), et par le fait qu'une vessie élastique (13) avec une plaque de frein associée (14) est disposée dans chaque espace intermédiaire.

4. Dispositif de colonne selon la revendication 3, **caractérisé** par le fait que les parties de colonne sont constituées d'une paire d'éléments tubulaires télescopiques (2, 3), dont l'un intérieur entoure un dispositif de cylindre à piston pneumatique (7) dont la tige de piston (8) est réunie à une partie de colonne et dont le cylindre (7) est réuni à l'autre partie de colonne.
